# EUROPEAN PATENT SPECIFICATION

(11) **EP 3 519 081 B1**
(45) Date of publication and mention of the grant of the patent: **03.07.2024**
(21) Application number: 17825103.9
(22) Date of filing: 29.09.2017
(51) Int. Cl.: B01D 53/04, B01D 53/26, B01D 53/28

(54) **METHOD FOR REDUCING THE WATER VAPOR CONTENT IN A COMBUSTION AND/OR EXHAUST GAS BY ADSORPTION**
VERFAHREN ZUR REDUZIERUNG DES WASSERDAMPFGEHALTS IN EINER VERBRENNUNG UND/ODER EINEM ABGAS DURCH ADSORPTION
PROCÉDÉ DE RÉDUCTION DE LA TENEUR EN VAPEUR D'EAU DANS UN GAZ DE COMBUSTION ET/OU D'ÉCHAPPEMENT PAR ADSORPTION

(30) Priority: 30.09.2016 GB 201616713
(43) Date of publication of application: 07.08.2019
(73) Proprietor: Krajete GmbH, 4020 Linz (AT)
(72) Inventor: KRAJETE, Alexander, 4020 Linz (AT); SEIFERT, Arne, 1120 Vienna (AT); BERNACCHI, Sebastien, 1150 Vienna (AT)
(74) Representative: Graf von Stosch Patentanwaltsgesellschaft mbH
(86) International application number: PCT/EP2017/074888
(87) International publication number: WO 2018/060486

(56) References cited:
- US-A1- 2011 047 987
- US-A1- 2013 341 564
- US-A1- 2016 059 185
- Ityona Amber: "Experimental determination of the adsorption capacity of synthetic Zeolite A/water pair for solar cooling applications", Journal of Mechanical Engineering Research, vol. 4, no. 4, 1 April 2012 (2012-04-01), XP055364442, DOI: 10.5897/JMER11.080

## Description

The present invention relates to a method for reducing the water vapor content in a combustion gas of a vehicle, the method comprising the steps of:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor, and
c) contacting the at least one particulate adsorber material of step a) with the combustion gas of step b) for adsorbing at least a part of the water vapor from the combustion gas onto the surface and/or into the pores of the at least one particulate adsorber material,
wherein the water vapor content in the combustion gas obtained after contacting in step c) is at least 10 wt.-%, based on the total weight of water vapor in the combustion gas of step b), below the water vapor content in the combustion gas of step b), a vehicle comprising a system for reducing the water vapor content in a combustion gas as well as the use of the at least one particulate adsorber material in the claimed method for reducing the water vapor content in a combustion gas as defined in the claims.

In the last three decades, the pollution of the environment has become a major concern, especially in urban areas. Pollutants such as CO₂, CO, NOₓ, SO₂, VOCs, etc. contribute to the environmental pollution and are said to adversely affect the health of human beings as well as of animals and plants. These pollutants are typically emitted in the environment from combustion processes such as power and heating plants, and motor vehicles and/or production processes such as industrial facilities.

In the art, several attempts have been made to reduce the concentration of such pollutants in media such as gases released into the environment.

For example, US 5,158,582 refers to a method of removing NOx by adsorption wherein a gas containing NOx at a low concentration is brought into contact with an adsorbent comprising a copper salt supported on zeolite serving as a carrier, whereby the NOx is adsorbed and removed efficiently. The adsorbent for use in this method comprises at least one copper salt supported on natural or synthetic zeolite, the copper salt being selected from the group consisting of copper chloride, double salt of copper chloride and ammine complex salt of copper chloride.

US 4,507,271 refers to the removal of nitrous oxide gases containing hydrogen, nitric oxide and nitrous oxide by a process in which the gases are treated with molecular sieves. US 2005/0247049 A1 relates to systems for removing NOx from exhaust. In one aspect of the invention, after adsorption, an NOx adsorber is isolated from the main exhaust flow and desorption induced by raising the temperature. The desorbed NOx is combined with a reductant and reduced over a catalyst. US 3,015,369 refers to the removal of nitrogen oxides from combustion gases. US 5,919,286 refers to the removal of nitrogen oxides from gas.

US 4,533,365 refers to the separation and recycling of NOx gas constituents through adsorption and desorption on a molecular sieve, the molecular sieve is passed through in sequential, alternating process steps. Initially, the NOx is retained up to saturation of the molecular sieve. Thereafter the molecular sieve is regenerated through the introduction of gas. In order to reduce the demands during scavenging of the molecular sieve, and then to facilitate the provision of a closed separating and recycling system, the molecular sieve for regeneration is heated to a temperature for desorbing the adsorbed NOx and scavenged with a portion of the waste gas containing the NOx which is to be cleaned. The scavenging gas flow is recycled after passing through the molecular sieve.

US 2016/0059185 describes an exhaust gas processing system and a processing method for removing a sulfur oxide and a nitrogen oxide. US 2011/0047987 relates to an exhaust emission control system used in an internal combustion engine.

US 2013/0341564 concerns the elimination of heavy metals present in dry or moist gaseous effluent by means of a capture mass comprising a porous support at least part of which is of low mesoporosity and an active phase based in elemental sulfur.

The reversible adsorption of pollutants such as CO₂, CO, NOₓ, SO₂, VOCs, etc. present in combustion gases using adsorbers is an effective purification method. However, gases released from combustion processes always contain water vapor, which is also bound by most of the used adsorbers, such that the pollutant binding capacity of the adsorber is reduced or even not existing.

Thus, several different technologies have been developed in which the combustion gas is dried. These are for example condensation over temperature decrease (cooling), condensation via pressure elevation, separation by mechanical means or membranes.

However, there is still a need in the art for reducing the water vapor content in a combustion gas released from combustion processes and thus provide an improved efficiency for adsorbing pollutants such as CO₂, CO, NOₓ, SO₂, VOCs, etc..

It is thus an object of the present invention to provide a method for reducing the water vapor content in a combustion gas of a vehicle, the method comprising the steps of:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor, and
c) contacting the at least one particulate adsorber material of step a) with the combustion gas of step b) for adsorbing at least a part of the water vapor from the combustion gas onto the surface and/or into the pores of the at least one particulate adsorber material,
wherein the water vapor content in the combustion gas obtained after contacting in step c) is at least 10 wt.-%, based on the total weight of water vapor in the combustion gas of step b), below the water vapor content in the combustion gas of step b). Another object may also be seen in the provision of a method for reducing the water vapor content in a combustion gas of a vehicle that effectively increases the adsorption of pollutants such as CO₂, CO, NOₓ, SO₂, VOCs, etc.. A further object may be seen in the provision of a method for reducing the water vapor content in a combustion gas of a vehicle that effectively decreases the amount of pollutants such as CO₂, CO, NOₓ, SO₂, VOCs, etc. in the combustion gas released from the vehicle.

A further object may be seen in the provision of a method for reducing the water vapor content in a combustion gas of a vehicle enabling a low overall energy consumption for the method and corresponding system. A still further object may be seen in the provision of method for reducing the water vapor content in a combustion gas of a vehicle enabling increasing the efficiency of such a method, especially as regards time and the consumption of chemicals.

One or more of the foregoing and other problems are solved by the subject-matter as defined herein in the independent claims. Advantageous embodiments of the present invention are defined in the corresponding sub-claims.

According to one aspect of the present application a method for reducing the water vapor content in a combustion gas of a vehicle is provided. The method comprising, more preferably consisting of, the following steps:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor, and
c) contacting the at least one particulate adsorber material of step a) with the combustion gas of step b) for adsorbing at least a part of the water vapor from the combustion gas onto the surface and/or into the pores of the at least one particulate adsorber material, wherein the water vapor content in the combustion gas obtained after contacting in step c) is at least 10 wt.-%, based on the total weight of water vapor in the combustion gas of step b), below the water vapor content in the combustion gas of step b).

According to another aspect of the present invention, a vehicle comprising a system for reducing the water vapor content in a combustion gas is provided. The system comprising, preferably consisting of,
a) at least two column(s) and/or cartridge(s) comprising at least one particulate adsorber material as defined in the claims, wherein the at least two column(s) and/or cartridge(s) are arranged in parallel, and
b) one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof, which is/are located after the at least two column(s) and/or cartridge(s) comprising at least one particulate adsorber material.

According to still a further aspect of the present invention, the use of at least one particulate adsorber material as defined in the claims in the method for reducing the water vapor content in a combustion gas of a vehicle is provided.

According to one embodiment of the present method, the combustion gas is a gas mixture resulting from the combustion of a carbon or hydrocarbon based fuel, preferably the carbon or hydrocarbon based fuel is selected from the group consisting of methane, propane, butane, petrol, diesel, jet fuel, natural gas, gasoline, fuel oil, methanol, dimethylether (DME), ethanol, biogas, biofuel, industrial fuel gas, syngas, waste incineration gas or mixtures thereof.

According to another embodiment of the present method, the combustion gas comprises the water vapor in an amount of at least 5 g/Nm³, preferably in an amount ranging from 5 to 700 g/Nm³.

According to yet another embodiment of the present method, the vehicle is selected from a car, truck, bus, ship, train, boat or aircraft.

According to one embodiment of the present method, the at least one particulate adsorber material of step a) is provided in form of a powder, crushed material, granulated powder, pellets, tablets, pressed or sintered material, cylinders, rings, spherical particles, filter material, in a column and/or cartridge.

According to another embodiment of the present method, the at least one particulate adsorber material of step a) is selected from the group comprising silica, alumina, aluminium silicates, and mixtures thereof, preferably silica or a mixture of silica and alumina.

According to yet another embodiment of the present method, the at least one particulate adsorber material of step a) has i) a weighted average particle size of ≥ 200 µm, more preferably from 200 to 6 000 µm, even more preferably from 500 to 5 500 µm and most preferably from 1 000 to 5 000 µm, and/or ii) a BET specific surface area as measured by the BET nitrogen method of ≥10 m²/g, more preferably from 10 to 1 400 m²/g, even more preferably of from 100 to 1 300 m²/g and most preferably of from 300 to 1 200 m²/g, and/or iii) a crush strength of at least 4 N, more preferably of from 4 to 400 N and most preferably of from 4 to 300 N, and/or a bulk density of at least 300 kg/m³, more preferably of from 300 to 1 000 kg/m³and most preferably of from 400 to 900 kg/m³.

According to one embodiment of the present method, the reduction of the water vapor content in the combustion gas is substantially obtained by physisorption.

According to another embodiment of the present method, contacting step c) is carried out a) by passing the combustion gas of step b) through the at least one particulate adsorber material of step a), and/or b) at a temperature ranging from -50 to 500 °C, preferably from -40 to 350 °C, even more preferably from -30 to 250 C and most preferably from -30 to 180 °C, and/or c) at a pressure ranging from 0.1 to 20 bar, preferably from 0.5 to 15 bar and most preferably from 1 to 10 bar.

According to yet another embodiment of the present method, the reduction of the water vapor content in the combustion gas is achieved when the water vapor content in the combustion gas obtained after contacting step c) is below the water vapour content in the combustion gas of step b), preferably the water vapor content in the combustion gas obtained after contacting step c) is at least 10 wt.-%, more preferably at least 40 wt.-%, even more preferably at least 60 wt.-% and most preferably at least 80 wt.-%, based on the total weight of water vapor in the combustion gas of step b), below the water vapor content in the combustion gas of step b).

According to one embodiment of the present method, the method comprises a further step d) of regenerating the at least one particulate adsorber material after step c) by substantially removing the water vapor adsorbed onto the surface and/or into the pores of the at least one particulate adsorber material.

According to another embodiment of the present method, step d) is carried out by passing a gas having a temperature of above the temperature in step c) in flow or counterflow through the at least one particulate adsorber material, preferably the gas has a temperature of at least 50 °C, more preferably at least 80 °C, even more preferably at least 80 °C and most preferably at least 100 °C.

According to yet another embodiment of the present method, the at least one particulate adsorber material of step a) a) is provided in at least two column(s) and/or cartridge(s) which are arranged in parallel, and/or b) is arranged such that it is located before one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

According to one embodiment of the present method, the at least two column(s) and/or cartridge(s) comprising the at least one particulate adsorber are configured such that method step c) is carried out in at least one of the at least two column(s) and/or cartridge(s) and method step d) is carried out in at least one of the remaining column(s) and/or cartridge(s).

Where the term "comprising" is used in the present description and claims, it does not exclude other non-specified elements of major or minor functional importance. For the purposes of the present invention, the term "consisting of" is considered to be a preferred embodiment of the term "comprising of'. If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

As set out above, the inventive method for reducing the water vapor content in a combustion gas of a vehicle comprises the steps a), b) and c) and optionally step d).

In the following, it is referred to further details of the present invention and especially the foregoing steps of the inventive method for reducing the water vapor content in a combustion gas of a vehicle. Those skilled in the art will understand that many embodiments described herein can be combined or applied together as long as they fall under the scope of the appended claims.

### Characterisation of step a): provision of at least one particulate adsorber material

According to step a) of the method of the present invention, at least one particulate adsorber material having a moisture adsorption capacity at 40 °C of at least 1 wt.-%, based on the total weight of the adsorber, is provided.

The term "at least one" particulate adsorber material in the meaning of the present invention means that the particulate adsorber material comprises, preferably consists of, one or more particulate adsorber material(s).

In one embodiment of the present invention, the at least one particulate adsorber material(s) comprises, preferably consists of, one particulate adsorber material. Alternatively, the at least one particulate adsorber material(s) comprises, preferably consists of, two or more particulate adsorber materials. For example, the at least one particulate adsorber material(s) comprises, preferably consists of, two or three or four particulate adsorber materials.

Preferably, the at least one particulate adsorber material(s) comprises, preferably consists of, one particulate adsorber material.

If the at least one particulate adsorber material(s) comprises, preferably consists of, two or more particulate adsorber materials, the two or more particulate adsorber materials can be of the same or different material. Preferably, the two or more particulate adsorber materials are made from the same material. That is to say, the two or more particulate adsorber materials are preferably provided in different units.

It is appreciated that the at least one particulate adsorber material can be any kind of adsorber material as long as it has a moisture adsorption capacity at 40 °C of at least 1 wt.-%, based on the total weight of the adsorber. Preferably, the at least one particulate adsorber material has a moisture adsorption capacity at 40 °C of at least 5 wt.-%, more preferably of at least 10 wt.-%, even more preferably of at least 15 wt.%, and most preferably of at least 20 wt.-%, based on the total weight of the adsorber. For example, the at least one particulate adsorber material has a moisture adsorption capacity at 40 °C in the range from 10 to 90 wt.-%, more preferably from 15 to 80 wt.-%, and most preferably from 20 to 60 wt.-%, based on the total weight of the adsorber.

It is appreciated that, if not otherwise indicated, the moisture adsorption capacity at 40 °C is determined at a relative humidity of 100 %, based on the total volume of the combustion gas.

The at least one particulate adsorber material consists of silica in an amount of about 97 wt.-% and alumina or aluminum oxide in an amount of about 3 wt.-%, based on the total weight of the particulate adsorber material.

Silica is well known in the art and is commercially available from a great variety of sources. Preferably, silica is amorphous silica (CAS 63231 67 4 or CAS 7631 86 9).

Alumina, which is also called aluminum oxide, is well known in the art and is commercially available from a great variety of sources. Preferably, alumina is activated alumina (CAS 1344 28 1).

Aluminum silicates are well known in the art and are commercially available from a great variety of sources. Preferably, aluminum silicates are zeolites (CAS 1318 02 1).

Due to the low water heat adsorption, silica, such as amorphous silica, is preferably provided as the at least one particulate adsorber material of step a).

The at least one particulate adsorber material of step a) consists of silica in an amount of about 97 wt.-% and alumina or aluminum oxide in an amount of about 3 wt.-%, based on the total weight of the particulate adsorber material.

The at least one particulate adsorber material of step a) preferably has a weighted average particle size of ≥ 200 µm, more preferably from 200 to 6 000 µm, even more preferably from 500 to 5 500 µm and most preferably from 1 000 to 5 000 µm.

The weighted average particle size refers to the weight distribution of different sizes of particles. The particle size of the particles can be e.g, determined by optical methods such as microscopy.

Additionally or alternatively, the at least one particulate adsorber material of step a) has a BET specific surface area of 750 m²/g.

The "BET specific surface area" of the particulate material in the meaning of the present invention is measured by nitrogen adsorption using the BET isotherm (ISO 9277:2010), and is specified in m²/g.

The at least one particulate adsorber material of step a) has a crush strength of 200 N.

The "crush strength" of the particulate material in the meaning of the present invention is measured by using ASTM D4179 or ASTM D6175.

The at least one particulate adsorber material of step a) has a bulk density of 800 kg/m³.

The "bulk density" of the particulate material in the meaning of the present invention is measured in accordance with ASTM C29 / C29M.

In one embodiment, the at least one particulate adsorber material of step a) has
i) a weighted average particle size of ≥ 200 µm, more preferably from 200 to 6 000 µm, even more preferably from 500 to 5 500 µm and most preferably from 1 000 to 5 000 µm, and
ii) a BET specific surface area as measured by the BET nitrogen method of 750 m²/g, and
iii) a crush strength of 200 N, and
iv) a bulk density of 800 kg/m³.

It is required that the at least one adsorber material of step a) is provided in particulate form. Preferably, the at least one particulate adsorber material of step a) is provided in form of a powder, crushed material, granulated powder, pellets, tablets, pressed or sintered material cylinders, rings, spherical particles, filter material, in a column and/or cartridge.

It is appreciated that the at least one particulate adsorber material of step a) is provided such that a flow of gas through the particles of the adsorber material is achieved. Furthermore, it is advantageous that the back pressure in the system is low. Thus, it is preferred that the at least one particulate adsorber material of step a) is provided as particulate adsorber material having relatively big particles and high interparticle space.

In one embodiment, the at least one particulate adsorber material of step a), e.g. the mixture of silica and alumina (or aluminum oxide), has a pore volume of 0.4 cm³/g. These values are calculated from a mercury porosimetry measurement, which method is well known in the art.

Thus, it is preferred that the at least one particulate adsorber material of step a) is provided as pellets, tablets, spherical particles, rings, cylinders, in a column and/or cartridge.

For example, the at least one particulate adsorber material of step a) is provided in a column and/or cartridge. Preferably, the at least one particulate adsorber material of step a) is provided as powder, crushed material, granulated powder, pellets, tablets, pressed or sintered material cylinders, rings, spherical particles, filter material, in a column and/or cartridge.

In one embodiment, the at least one particulate adsorber material of step a) is provided in at least two column(s) and/or cartridge(s) which are arranged in parallel. For example, the at least one particulate adsorber material of step a) is provided in 2 to 10, preferably 2 to 8 and most preferably 2 to 6, column(s) and/or cartridge(s) which are arranged in parallel.

Additionally or alternatively, the at least one particulate adsorber material of step a) is arranged such that it is located before one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

In one embodiment, the at least one particulate adsorber material of step a) is provided in at least two column(s) and/or cartridge(s) which are arranged in parallel and the at least one particulate adsorber material of step a) is arranged such that it is located before one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

### Characterisation of step b): provision of a combustion gas

According to step b) of the present method, a combustion gas comprising water vapour is provided.

It is appreciated that the combustion gas is preferably a gas mixture resulting from the combustion of a fossile or non-fossile fuel on a hydrocarbon or carbon basis with oxygen. Preferably, the combustion gas is a gas mixture resulting from the combustion of a hydrocarbon based fuel. For example, the hydrocarbon based fuel is selected from the group consisting of methane, propane, butane, petrol, diesel, jet fuel (or kerosene), natural gas, gasoline, fuel oil, methanol, dimethylether (DME), ethanol, biogas, biofuel, industrial fuel gas, syngas, waste incineration gas or mixtures thereof. Preferably, the hydrocarbon fuel is methane, diesel or gasoline. Herein, the terms gasoline and petrol are exchangeable. Furthermore, the terms jet fuel and kerosene are exchangeable. Of course, principally any gas may be comprised in the combustion gas depending on the industrial process from which the combustion gas originates.

The combustion takes place in a vehicle.

For example, the vehicle is selected from a car, truck, bus, ship, train, boat or aircraft. The vehicle may also be any other possible vehicle.

It is appreciated that the at least one particulate adsorber material of step a) is placed in the vehiclein which the combustion takes place. Optionally, the vehicleuses the hydrocarbon based fuel as fuel and/or the combustion of the hydrocarbon based fuel provides the energy for motion and operation of the vehicle.

The combustion gas comprises water vapour. Preferably, the combustion gas comprises the water vapor in an amount of at least 5 g/Nm³, preferably in an amount ranging from 5 to 700 g/Nm³.

### Characterisation of step c): contacting the at least one particulate adsorber material with the combustion gas

According to step c) of the present method, the at least one particulate adsorber material of step a) is contacted with the combustion gas of step b) for adsorbing at least a part of the water vapor from the combustion gas onto the surface and/or into the pores of the at least one particulate adsorber material.

In general, the at least one particulate adsorber material of step a) and the combustion gas of step b) can be brought into contact by any conventional means known to the skilled person.

For example, contacting step c) is carried out by passing the combustion gas of step b) through the at least one particulate adsorber material of step a). This embodiment is especially preferred if the at least one particulate adsorber material of step a) is provided in form of a column, cartridge, or filter material.

It is appreciated that the at least one particulate adsorber material of step a) is contacted with the combustion gas of step b) at a concentration and for a time sufficient for taking up the water vapor from the combustion gas onto the surface and/or into the pores of the at least one particulate adsorber material.

It is appreciated that contacting step c) is can be carried out over a broad temperature and pressure range. For example, contacting step c) is carried out at the temperature and pressure conditions typically applied in the vehicle in which the combustion takes place.

Alternatively, contacting c) is carried out in that the combustion gas is cooled down below the temperature conditions typically applied in the vehicle in which the combustion takes place.

Thus, contacting step c) is preferably carried out at a temperature ranging from -50 to 500 °C, preferably from -40 to 350 °C, even more preferably from -30 to 250 °C and most preferably from -30 to 180 °C, and/or at a pressure ranging from 0.1 to 20 bar, preferably from 0.5 to 15 bar and most preferably from 1 to 10 bar. For example, contacting step c) is preferably carried out at a temperature ranging from -50 to 500 °C, preferably from -40 to 350 °C, even more preferably from -30 to 250 °C and most preferably from -30 to 180 °C, or at a pressure ranging from 0.1 to 20 bar, preferably from 0.5 to 15 bar and most preferably from 1 to 10 bar. Alternatively, contacting step c) is preferably carried out at a temperature ranging from -50 to 500 °C, preferably from -40 to 350 °C, even more preferably from -30 to 250 °C and most preferably from -30 to 180 °C, and at a pressure ranging from 0.1 to 20 bar, preferably from 0.5 to 15 bar and most preferably from 1 to 10 bar.

The term "adsorption" in the meaning of the present invention is understood as the adhesion of water molecules to the surface and/or into the pores of the at least one particulate adsorber material, whereby the adsorbent builds up a layer on the surface or in the pores of the adsorbent. It is a surface phenomenon. This process differs from absorption, in which a fluid (the absorbate) permeates or is dissolved by a liquid or solid (the absorbent). Adsorption is a surface-based process while absorption involves the whole volume of the material.

It is appreciated that the reduction of the water vapor content in the combustion gas is substantially obtained by physisorption.

In general, the amount of water vapor adsorbed from the combustion gas by the at least one particulate adsorber material may vary depending on the water vapor content in the combustion gas and the at least one particulate adsorber material used.

However, it is preferred that the reduction of the water vapor content in the combustion gas is achieved when the water vapor content in the combustion gas obtained after contacting step c) is below the water vapor content in the combustion gas of step b).

For example, the water vapor content in the combustion gas obtained after contacting step c) is at least 10 wt.-%, more preferably at least 40 wt.-%, even more preferably at least 60 wt.-% and most preferably at least 80 wt.-%, based on the total weight of water vapor in the combustion gas of step b), below the water vapor content in the combustion gas of step b).

In one embodiment, the contacting is carried out for a time such that no further reduction of the water vapor content in the combustion gas is detected. The contacting time may be empirically determined using common methods known to the skilled person or described in the present application.

It is appreciated that contacting step c) can be repeated one or more times.

Accordingly, the combustion gas obtained in step c) preferably has a water vapor content below the water vapor content of the combustion gas provided in step b).

One advantage of the present invention is that the at least one particulate adsorber material of step a) can be regenerated if the maximum water vapor capacity of the at least one particulate adsorber material is reached.

Thus, the present method may comprise a further step of regenerating the at least one particulate adsorber material after step c) by substantially removing the water vapor adsorbed onto the surface and/or into the pores of the at least one particulate adsorber material.

In this embodiment, the method for reducing the water vapor content in a combustion gas of a vehicle, comprises, preferably consists of, the steps of:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor,
c) contacting the at least one particulate adsorber material of step a) with the combustion gas of step b) for adsorbing at least a part of the water vapor from the combustion gas onto the surface and/or into the pores of the at least one particulate adsorber material, and
d) regenerating the at least one particulate adsorber material after step c) by substantially removing the water vapor adsorbed onto the surface and/or into the pores of the at least one particulate adsorber material,
wherein the water vapor content in the combustion gas obtained after contacting in step c) is at least 10 wt.-%, based on the total weight of water vapor in the combustion gas of step b), below the water vapor content in the combustion gas of step b).

The term "removing the water vapour" is the reverse of adsorption, i.e. is the release of the adsorbed substance, here water vapor, from the at least one particulate adsorber material. The release of the water vapor from the at least one particulate adsorber material is also called desorption.

Preferably, step d) is carried out by passing a gas having a temperature of above the temperature in step c) in flow or counterflow, preferably counterflow, through the at least one particulate adsorber material. For example, the gas passing in flow or counterflow through the at least one particulate adsorber material has a temperature of at least 50 °C, more preferably at least 80 °C, even more preferably at least 80 °C and most preferably at least 100 °C.

For example, step d) is carried out after contacting step c).

When the maximum capacity of the at least one particulate adsorber material is reached, the combustion gas is preferably redirected onto at least one further particulate adsorber material, while the saturated at least one particulate adsorber material is regenerated in parallel. Thus, step d) is preferably carried out in parallel to contacting step c).

As already mentioned above, the at least one particulate adsorber material of step a) is preferably provided in at least two column(s) and/or cartridge(s) which are arranged in parallel.

Additionally or alternatively, the at least one particulate adsorber material of step a) is arranged such that it is located before one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

Preferably, the at least one particulate adsorber material of step a) is provided in at least two column(s) and/or cartridge(s) which are arranged in parallel and the at least one particulate adsorber material of step a) is arranged such that it is located before one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

In order to regenerate the at least one particulate adsorber material after step c), the at least two column(s) and/or cartridge(s) comprising the at least one particulate adsorber are preferably configured such that method step c) is carried out in at least one of the at least two column(s) and/or cartridge(s) and method step d) is carried out in at least one of the remaining column(s) and/or cartridge(s).

Thus, the method may comprises one or more particulate adsorber material(s) at which neither step c) nor step d) is carried, i.e. the one or more particulate adsorber material(s) are provided on hold, while step c) and/or step d) is/are carried out at the remaining particulate adsorber material(s).

For example, the at least two column(s) and/or cartridge(s) comprising the at least one particulate adsorber are configured such that method step c) is carried out in at least one of the at least two column(s) and/or cartridge(s) and method step d) is carried out in the remaining column(s) and/or cartridge(s).

In one embodiment, method steps c) and d) can be carried out simultaneously or separately. If method steps c) and d) are carried out simultaneously, method step c) is carried out in at least one of the at least two column(s) and/or cartridge(s) and method step d) is carried out in at least one of the remaining column(s) and/or cartridge(s) in parallel.

If method steps c) and d) are carried out separately, method step c) is carried out in at least one of the at least two column(s) and/or cartridge(s) and method step d) is carried out in the same column(s) and/or cartridge(s) in the given order, i.e. step d) is carried out after step c).

In view of method steps c) and d), the method for reducing the water vapor content in a combustion gas of a vehicle is preferably a continuous method, i.e. method steps c) and d) are carried out simultaneously.

It is appreciated that step d) can be repeated one or more times.

It is to be noted that the at least one particulate adsorber material regenerated in step d) can be provided again in step a). Thus, method steps a), b), c) and d), preferably in the given order, can be carried out one or more times, i.e. in cycle.

The present invention further provides a vehicle comprising a system for reducing the water vapor content in a combustion gas, the system comprising
a) at least two column(s) and/or cartridge(s) comprising at least one particulate adsorber material, wherein the at least two column(s) and/or cartridge(s) are arranged in parallel, and
b) one or more adsorber unit(s) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof, which is/are located after the at least two column(s) and/or cartridge(s) comprising at least one particulate adsorber material.

With regard to the definition of the system for reducing the water vapor content in a combustion gas and preferred embodiments thereof, reference is made to the statements provided above when discussing the technical details of the method for reducing the water vapor content in a combustion gas of a vehicle of the present invention.

A "column" and/or "cartridge" may be any container which can contain the at least one particulate adsorber material for water vapor and which can be placed in a stream of combustion gas to adsorb the water vapour. The cartridge may be in the form of an axial flow scrubber, wherein the combustion gas linearly passes through the adsorbent in the cartridge, in the form of a radial flow scrubber, wherein the combustion gas first passes the sorbent in vertical direction and then leaves the adsorbent material from the middle to the outer part in horizontal direction or the other way round.

The column and/or cartridge design must take the following aspects into consideration: A) the surface area of the at least one particulate adsorber material needs to be adequate to the percentage of water vapor in the combustion gas and the time period the at least one particulate adsorber material should capture the water vapor without desorption taking place. B) The gas flow rate needs to be slow enough for the water vapor to be absorbed or adsorbed (dwell time). C) Optimal packing of the at least one particulate adsorber material to avoid that a path is formed which allows the combustion gas to pass the at least one particulate adsorber material without being captured (known as channeling). For this purpose, a net/grid/diffuser is placed inside the cartridge and along its longitudinal direction.

The column and/or cartridge may have any form suitable for performing the method of the invention. Examples of such forms are cylindrical, conical, cube-shaped, cuboid, and others and mixtures thereof. Further, the column and/or cartridge is suitable for containing the at least one particulate adsorber material and has at least one opening for entry of the combustion gas and at least one opening for exit of the combustion gas.

It is preferred to install more than one cartridge in parallel in one single vehicle.

The system may be further equipped with a chemical indicator which indicates that the at least one particulate adsorber material is saturated or close to saturation with water vapor. In this case, the regenerating step should follow in due time in order to provide a regenerated at least one particulate adsorber material in the method. The system can also optionally be equipped with a temperature and/or pressure sensor since step d) may be carried out at elevated temperature and/or pressure.

The present invention further provides a vehicle comprising the system as claimed.

With regard to the definition of the vehicle comprising the system and preferred embodiments thereof, reference is made to the statements provided above when discussing the technical details of the method for reducing the water vapor content in a combustion gas of a vehicle and the system for reducing the water vapor content in a combustion gas of the present invention.

The present invention also comprises the use of the at least one particulate adsorber material in the method for reducing the water vapor content in a combustion gas of a vehicle. Thus, the use of the at least one particulate adsorber material in the method for reducing the water vapor content in a combustion gas of a vehicle is provided, the method comprising, preferably consisting of, the steps of:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor,
c) contacting the at least one particulate adsorber material of step a) with the combustion gas of step b) for adsorbing at least a part of the water vapor from the combustion gas onto the surface and/or into the pores of the at least one particulate adsorber material, and
d) optionally regenerating the at least one particulate adsorber material after step c) by substantially removing the water vapor adsorbed onto the surface and/or into the pores of the at least one particulate adsorber material,
wherein the water vapor content in the combustion gas obtained after contacting in step c) is at least 10 wt.-%, based on the total weight of water vapor in the combustion gas of step b), below the water vapor content in the combustion gas of step b).

With regard to the definition of the at least one particulate adsorber material, the method and preferred embodiments thereof, reference is made to the statements provided above when discussing the technical details of the method for reducing the water vapor content in a combustion gas of a vehicle.

### BRIEF DESCRIPTION OF THE FIGURES

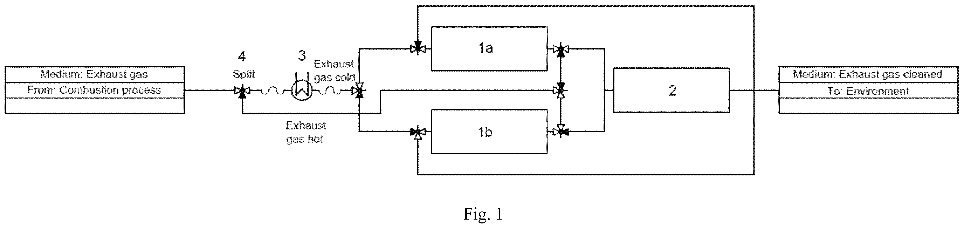

Fig. 1 shows the schematic setup of such a method. The hot combustion gas is cooled down to adsorption temperature through heat exchange with the environment (surrounding air) (3). This can be achieved over a heat exchanger, cooling fins or in the simplest way over surrounding air passing around the surface of the pipe containing the combustion gas. During this step, part of the water vapor is eventually already condensated and can be removed via a water trap. The cooled down combustion gas is then passed over the adsorption unit (1a) comprising at least one particulate adsorber material having a moisture adsorption capacity at 40 °C of at least 1 wt.-%, based on the total weight of the adsorber, where it is dehumidified and therefore prepared for the subsequent adsorptive pollutant removal in the second adsorber unit (or multiple adsorber units) (2) which is suitable for the adsorption of pollutants. In this step, the targeted pollutants are removed from the combustion gas via adsorption, leading to a significant reduction of pollutants in the combustion gas stream that leaves the system (into the environment). Prior to the initial exhaust gas cooling step, a part of the hot exhaust gas is diverted in order to be used for the regeneration of the saturated adsorber unit (1b) comprising at least one particulate adsorber material having a moisture adsorption capacity at 40 °C of at least 1 wt.-%, based on the total weight of the adsorber. The adsorber unit is flushed in flow or counterflow with the hot combustion gas leading to the desorption of the bound water vapor due to the temperature increase. The desorbed water vapor is removed with the combustion gas stream.

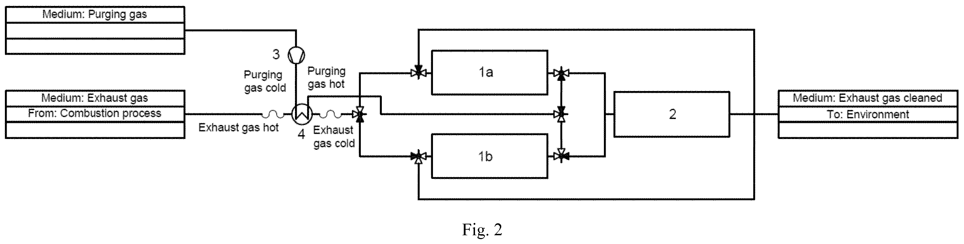

Fig. 2 shows an alternative setup to Fig. 1, where another purging gas (for example surrounding air) can be used for desorption. Therefor the purging gas could, for example by means of a blower, be directed over a heat exchanger and be heated up by the hot combustion gas, which is in parallel be cooled down to adsorption temperature (leading already to condensation of a part of the contained water vapor). The hot purging gas is then, in accordance with the setup in Fig. 1, directed in counterflow over the saturated adsorption unit comprising at least one particulate adsorber material having a moisture adsorption capacity at 40 °C of at least 1 wt.-%, based on the total weight of the adsorber, for regeneration. The desorbed water is removed with the purge gas.

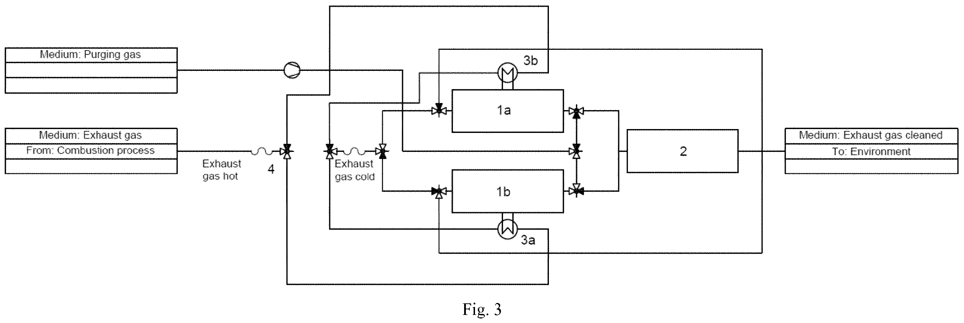

Fig. 3 shows a further alternative setup, where not the purging gas that is heated by the hot combustion gas, but rather the adsorption unit (3a, 3b) comprising at least one particulate adsorber material having a moisture adsorption capacity at 40 °C of at least 1 wt.-%, based on the total weight of the adsorber, itself for example over a double jacket. While the adsorption unit (3a, 3b) is heated up, the combustion gas is cooled down. The heated adsorption unit (3a, 3b) is then passed through with the purging gas in counterflow during regeneration.

### EXAMPLE

In accordance with the setup in Fig. 1, diesel exhaust gas from a motor vehicle (about 3 to 10 Nm³/h (stationary: about 3 Nm³/h; driving: 10 Nm³/h)) comprising CO₂ and NOx in usual amounts and 20-30 g water vapour per m³ exhaust gas was passed in split mode over the adsorption unit (1a) comprising the at least one particulate adsorber material having a moisture adsorption capacity at 40 °C of at least 1 wt.-%, based on the total weight of the adsorber. The at least one particulate adsorber material consisted of silica in an amount of about 97 wt.-% and alumina (or aluminum oxide) in an amount of about 3 wt.-%, based on the total weight of the particulate adsorber material. The particulate adsorber material had a BET specific surface area of 750 m²/g, a crush strength of 200 N, a bulk density of 800 kg/m³, and a pore volume of 0.4 cm³/g.

The adsorption unit (1a) had a total volume of about 9 L and contained about 6 kg of the at least one particulate adsorber material having a moisture adsorption capacity at 40 °C of at least 1 wt.-%, based on the total weight of the adsorber. The adsorption unit (1a) was able to bind about 2 kg of water vapor corresponding to a dewatering of exhaust gas in the range of about 60 to 70 Nm³. At about 10 Nm³/h, the reduction of water vapour in the exhaust gas was achieved over an operation time of about 7 h by the adsorption unit (1a) such that an almost complete removal of nitrogen oxides from the exhaust gas was achieved in the second adsorber unit (2) following the adsorption unit (1a).

As already mentioned above, the diesel exhaust gas was splitted such that a part of the hot gas was used to regenerate the adsorber unit after its saturation with water vapor (1b). The desorbed water vapor was removed with the exhaust gas stream. The regenerated adsorber unit (1a) was then again used for reducing the water vapor content in the exhaust gas.

## Claims

1. Method for reducing the water vapor content in a combustion gas of a vehicle, the method comprising the steps of:
a) providing at least one particulate adsorber material having a moisture adsorption capacity at 40 °C of at least 1 wt.-%, based on the total weight of the adsorber, wherein the at least one particulate adsorber material consists of silica in an amount of about 97 wt.-% and alumina or aluminum oxide in an amount of about 3 wt.-%, based on the total weight of the particulate adsorber material, the at least one particulate adsorber material having a BET specific surface area of 750 m²/g, a crush strength of 200 N, a bulk density of 800 kg/m³, and a pore volume of 0.4 cm³/g,
b) providing a combustion gas comprising water vapor, and
c) contacting the at least one particulate adsorber material of step a) with the combustion gas of step b) for adsorbing at least a part of the water vapor from the combustion gas onto the surface and/or into the pores of the at least one particulate adsorber material,
wherein the water vapor content in the combustion gas obtained after contacting in step c) is at least 10 wt.-%, based on the total weight of water vapor in the combustion gas of step b), below the water vapor content in the combustion gas of step b).

2. The method according to claim 1, wherein the combustion gas is a gas mixture resulting from the combustion of a carbon or hydrocarbon based fuel, preferably the carbon or hydrocarbon based fuel is selected from the group consisting of methane, propane, butane, petrol, diesel, jet fuel, natural gas, gasoline, fuel oil, methanol, dimethylether (DME), ethanol, biogas, biofuel, industrial fuel gas, syngas, waste incineration gas or mixtures thereof.

3. The method according to claim 1 or 2, wherein the combustion gas comprises the water vapor in an amount of at least 5 g/Nm³, preferably in an amount ranging from 5 to 700 g/Nm³.

4. The method according to any one of claims 1 to 3, wherein the vehicle is selected from a car, truck, bus, ship, train, boat or aircraft.

5. The method according to any one of claims 1 to 4, wherein the at least one particulate adsorber material of step a) is provided in form of a powder, crushed material, granulated powder, pellets, tablets, pressed or sintered material, cylinders, rings, spherical particles, filter material, in a column and/or cartridge (1a, 1b).

6. The method according to any one of claims 1 to 5, wherein the at least one particulate adsorber material of step a) has a weighted average particle size of ≥ 200 µm, more preferably from 200 to 6 000 µm, even more preferably from 500 to 5 500 µm and most preferably from 1 000 to 5 000 µm.

7. The method according to any one of claims 1 to 6, wherein the reduction of the water vapor content in the combustion gas is obtained by physisorption.

8. The method according to any one of claims 1 to 7, wherein contacting step c) is carried out
a) at a temperature ranging from -50 to 500 °C, preferably from -40 to 350 °C, even more preferably from -30 to 250 °C and most preferably from -30 to 180 °C, and/or
b) at a pressure ranging from 0.1 to 20 bar, preferably from 0.5 to 15 bar and most preferably from 1 to 10 bar.

9. The method according to any one of claims 1 to 8, wherein the water vapor content in the combustion gas obtained after contacting in step c) is at least 40 wt.-%, preferably at least 60 wt.-% and more preferably at least 80 wt.-%, based on the total weight of water vapor in the combustion gas of step b), below the water vapor content in the combustion gas of step b).

10. The method according to any one of claims 1 to 9, wherein the method comprises a further step d) of regenerating the at least one particulate adsorber material after step c) by removing the water vapor adsorbed onto the surface and/or into the pores of the at least one particulate adsorber material.

11. The method according to claim 10, wherein step d) is carried out by passing a gas having a temperature of above the temperature in step c) in flow or counterflow through the at least one particulate adsorber material, preferably the gas has a temperature of at least 50 °C, more preferably at least 80 °C, even more preferably at least 80 °C and most preferably at least 100 °C.

12. The method according to any one of claims 1 to 11, wherein the at least one particulate adsorber material of step a)
a) is provided in at least two column(s) and/or cartridge(s) (1a, 1b) which are arranged in parallel, and/or
b) is arranged such that it is located before one or more adsorber unit(s) (2) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof.

13. The method according to claim 12, wherein the at least two column(s) and/or cartridge(s) (1a, 1b) comprising the at least one particulate adsorber are configured such that method step c) is carried out in at least one of the at least two column(s) and/or cartridge(s) (1a) and method step d) is carried out in at least one of the remaining column(s) and/or cartridge(s) (1b).

14. A vehicle comprising a system for reducing the water vapor content in a combustion gas, the system comprising
a) at least two column(s) and/or cartridge(s) (1a, 1b) comprising at least one particulate adsorber material as defined in any one of claims 1, 5 or 6, wherein the at least two column(s) and/or cartridge(s) (1a, 1b) are arranged in parallel, and
b) one or more adsorber unit(s) (2) suitable for the adsorption of pollutants such as nitrogen oxide(s), carbon dioxide, carbon monoxide, volatile organic compound(s), sulphur oxide(s), hydrogen sulphide, ammonia, mercaptane(s), volatile amines, formaldehyde, acetaldehyde, propionaldehyde, acetone, methanol, dialkyl ether(s), particulate matter or mixtures thereof, which is/are located after the at least two column(s) or cartridge(s) (1a, 1b) comprising at least one particulate adsorber material.

15. Use of at least one particulate adsorber material as defined in any one of claims 1, 5 or 6 in the method according to any one of claims 1 to 13.

## Patentansprüche

1. Verfahren zur Reduzierung des Wasserdampfgehalts in einem Verbrennungsgas eines Fahrzeugs, wobei das Verfahren die folgenden Schritte umfasst:
a) Bereitstellen mindestens eines partikelförmigen Adsorbermaterials mit einer Feuchtigkeitsadsorptionskapazität bei 40 °C von mindestens 1 Gew.-%, bezogen auf das Gesamtgewicht des Adsorbers, wobei das mindestens eine partikelförmige Adsorbermaterial aus Siliziumdioxid in einer Menge von etwa 97 Gew.-% und Tonerde oder Aluminiumoxid in einer Menge von etwa 3 Gew.-%, bezogen auf das Gesamtgewicht des partikelförmigen Adsorbermaterials, besteht, wobei das mindestens eine partikelförmige Adsorbermaterial eine spezifische BET-Oberfläche von 750 m²/g, eine Bruchfestigkeit von 200 N, eine Schüttdichte von 800 kg/m³ und ein Porenvolumen von 0,4 cm³/g aufweist,
b) Bereitstellen eines Wasserdampf enthaltenden Verbrennungsgases, und
c) In-Kontakt-Bringen des mindestens einen partikelförmigen Adsorbermaterials aus Schritt a) mit dem Verbrennungsgas aus Schritt b), um mindestens einen Teil des Wasserdampfes aus dem Verbrennungsgas auf der Oberfläche und/oder in den Poren des mindestens einen partikelförmigen Adsorbermaterials zu adsorbieren,
wobei der Wasserdampfgehalt in dem Verbrennungsgas, das nach dem In-Kontakt-Bringen in Schritt c) erhalten wird, mindestens 10 Gew. %, bezogen auf das Gesamtgewicht des Wasserdampfes in dem Verbrennungsgas von Schritt b), unter dem Wasserdampfgehalt im Verbrennungsgas von Schritt b) liegt.

2. Verfahren nach Anspruch 1, wobei das Verbrennungsgas ein Gasgemisch ist, das aus der Verbrennung eines Brennstoffs auf Kohlenstoff- oder Kohlenwasserstoffbasis resultiert, wobei der Brennstoff auf Kohlenstoff- oder Kohlenwasserstoffbasis vorzugsweise ausgewählt ist aus der Gruppe bestehend aus Methan, Propan, Butan, Benzin, Diesel, Kerosin, Erdgas, Gasolin, Heizöl, Methanol, Dimethylether (DME), Ethanol, Biogas, Biokraftstoff, industriellem Brenngas, Synthesegas, Abfallverbrennungsgas oder Mischungen davon.

3. Verfahren gemäß Anspruch 1 oder 2, wobei das Verbrennungsgas den Wasserdampf in einer Menge von mindestens 5 g/Nm³, vorzugsweise in einer Menge von 5 bis 700 g/Nm³, enthält.

4. Verfahren gemäß irgendeinem der Ansprüche 1 bis 3, wobei das Fahrzeug ausgewählt ist aus einem Pkw, Lkw, Bus, Schiff, Zug, Boot oder Flugzeug.

5. Verfahren gemäß irgendeinem der Ansprüche 1 bis 4, wobei das mindestens eine partikelförmige Adsorbermaterial aus Schritt a) in Form von Pulver, zerkleinertem Material, granuliertem Pulver, Pellets, Tabletten, gepresstem oder gesintertem Material, Zylindern, Ringen, kugelförmigen Partikeln, Filtermaterial in einer Säule und/oder Kartusche (1a, 1b) bereitgestellt wird.

6. Verfahren gemäß irgendeinem der Ansprüche 1 bis 5, wobei das mindestens eine partikelförmige Adsorbermaterial aus Schritt a) eine gewichtsmittlere Partikelgröße von 200 µm, bevorzugter von 200 bis 6.000 µm, noch bevorzugter von 500 bis 5.500 µm und am meisten bevorzugt von 1.000 bis 5.000 µm, aufweist.

7. Verfahren gemäß irgendeinem der Ansprüche 1 bis 6, wobei die Reduzierung des Wasserdampfgehalts im Verbrennungsgas durch Physisorption erreicht wird.

8. Verfahren gemäß irgendeinem der Ansprüche 1 bis 7, wobei der Schritt c) des In-Kontakt-Bringens
a) bei einer Temperatur im Bereich von -50 bis 500 °C, bevorzugt von -40 bis 350 °C, noch bevorzugter von -30 bis 250 °C und am meisten bevorzugt von -30 bis 180 °C, und/oder
b) bei einem Druck im Bereich von 0,1 bis 20 bar, bevorzugt von 0,5 bis 15 bar und am meisten bevorzugt von 1 bis 10 bar
durchgeführt wird.

9. Verfahren gemäß irgendeinem der Ansprüche 1 bis 8, wobei der Wasserdampfgehalt in dem Verbrennungsgas, das nach dem In-Kontakt-Bringen in Schritt c) erhalten wird, mindestens 40 Gew.-%, bevorzugt mindestens 60 Gew.-% und bevorzugter mindestens 80 Gew.-%, bezogen auf das Gesamtgewicht des Wasserdampfes im Verbrennungsgas aus Schritt b), unter dem Wasserdampfgehalt im Verbrennungsgas aus Schritt b) liegt.

10. Verfahren gemäß irgendeinem der Ansprüche 1 bis 9, wobei das Verfahren einen weiteren Schritt d) des Regenerierens des mindestens einen partikelförmigen Adsorbermaterials nach Schritt c) durch Entfernen des an der Oberfläche und/oder in den Poren des mindestens einen partikelförmigen Adsorbermaterials adsorbierten Wasserdampfs umfasst.

11. Verfahren nach Anspruch 10, wobei Schritt d) durchgeführt wird, indem ein Gas mit einer Temperatur oberhalb der Temperatur in Schritt c) im Strom oder Gegenstrom durch das mindestens eine partikelförmige Adsorbermaterial geleitet wird, wobei das Gas bevorzugt eine Temperatur von mindestens 50 °C, bevorzugter von mindestens 80 °C, noch bevorzugter von mindestens 80 °C und am meisten bevorzugt von mindestens 100 °C aufweist.

12. Verfahren gemäß irgendeinem der Ansprüche 1 bis 11, wobei das mindestens eine partikelförmige Adsorbermaterial aus Schritt a)
a) in mindestens zwei Säulen und/oder Kartuschen (1a, 1b) bereitgestellt wird, die parallel angeordnet sind, und/oder
b) so angeordnet ist, dass es sich vor einer oder mehreren Adsorbereinheit(en) (2) befindet, die zur Adsorption von Schadstoffen, wie zum Beispiel Stickstoffoxid(en), Kohlendioxid, Kohlenmonoxid, (einer) flüchtigen organischen Verbindung(en), Schwefeloxid(en), Schwefelwasserstoff, Ammoniak, Mercaptan(en), flüchtigen Aminen, Formaldehyd, Acetaldehyd, Propionaldehyd, Aceton, Methanol, Dialkylether(n), Feinstaub oder Mischungen davon geeignet ist/sind.

13. Verfahren gemäß Anspruch 12, wobei die mindestens zwei Säulen und/oder Kartuschen (1a, 1b), die den mindestens einen partikelförmige Adsorber umfassen, so konfiguriert sind, dass Verfahrensschritt c) in mindestens einer der mindestens zwei Säulen und/oder Kartuschen (1a) durchgeführt wird und Verfahrensschritt d) in mindestens einer der verbleibenden Säulen und/oder Kartuschen (1b) durchgeführt wird.

14. Fahrzeug umfassend ein System zur Reduzierung des Wasserdampfgehalts in einem Verbrennungsgas, wobei das System umfasst
a) mindestens zwei Säulen und/oder Kartuschen (1a, 1b), die mindestens ein partikelförmiges Adsorbermaterial, wie in irgendeinem der Ansprüche 1, 5 oder 6 definiert, enthalten, wobei die mindestens zwei Säulen und/oder Kartuschen (1a, 1b) parallel angeordnet sind, und
b) eine oder mehrere Adsorbereinheit(en) (2), die für die Adsorption von Schadstoffen, wie zum Beispiel Stickstoffoxid(en), Kohlendioxid, Kohlenmonoxid, (einer) flüchtigen organischen Verbindung(en), Schwefeloxid(en), Schwefelwasserstoff, Ammoniak, Mercaptan(en), flüchtigen Aminen, Formaldehyd, Acetaldehyd, Propionaldehyd, Aceton, Methanol, Dialkylether(n), Feinstaub oder Mischungen davon, geeignet ist/sind, und die sich hinter den mindestens zwei Säulen oder Kartuschen (1a, 1b), die mindestens ein partikelförmiges Adsorbermaterial enthalten, befindet/befinden.

15. Verwendung mindestens eines partikelförmigen Adsorbermaterials, wie in irgendeinem der Ansprüche 1, 5 oder 6 definiert, in dem Verfahren gemäß irgendeinem der Ansprüche 1 bis 13.

## Revendications

1. Procédé de réduction de la teneur en vapeur d'eau dans un gaz de combustion d'un véhicule, le procédé comprenant les étapes suivantes :
a) la fourniture d'au moins un matériau adsorbeur particulaire présentant une capacité d'adsorption de l'humidité à 40 °C d'au moins 1 % en poids, sur la base du poids total de l'au moins un matériau adsorbeur, dans lequel l'au moins un matériau adsorbeur particulaire est constitué par de la silice selon une quantité d'environ 97 % en poids et par de l'alumine ou de l'oxyde d'aluminium selon une quantité d'environ 3 % en poids, sur la base du poids total de l'au moins un matériau adsorbeur particulaire, l'au moins un matériau adsorbeur particulaire présentant une aire de surface spécifique BET de 750 m²/g, une résistance à l'écrasement de 200 N, une masse volumique apparente de 800 kg/m³ et un volume de pores de 0,4 cm³/g ;
b) la fourniture d'un gaz de combustion comprenant de la vapeur d'eau ; et
c) la mise en contact de l'au moins un matériau adsorbeur particulaire de l'étape a) avec le gaz de combustion de l'étape b) pour adsorber au moins une partie de la vapeur d'eau à partir du gaz de combustion sur la surface et/ou à l'intérieur des pores de l'au moins un matériau adsorbeur particulaire ;
dans lequel la teneur en vapeur d'eau dans le gaz de combustion qui est obtenu après la mise en contact de l'étape c) est d'au moins 10 % en poids, sur la base du poids total de la vapeur d'eau dans le gaz de combustion de l'étape b), en-dessous de la teneur en vapeur d'eau dans le gaz de combustion de l'étape b).

2. Procédé selon la revendication 1, dans lequel le gaz de combustion est un mélange de gaz résultant de la combustion d'un carburant à base de carbone ou d'hydrocarbure(s), de préférence, le carburant à base de carbone ou d'hydrocarbure(s) est sélectionné parmi le groupe constitué par le méthane, le propane, le butane, l'essence, le diesel, le kérosène, un gaz naturel, le gasoil, les huiles combustibles, le méthanol, l'éther de diméthyle (DME), l'éthanol, le biogaz, un biocarburant, un gaz combustible industriel, un gaz de synthèse ou syngaz, le gaz d'incinération des déchets ou des mélanges de ceux-ci.

3. Procédé selon la revendication 1 ou 2, dans lequel le gaz de combustion comprend de la vapeur d'eau selon une quantité d'au moins 5 g/Nm³, de préférence, selon une quantité s'inscrivant l'intérieur de la plage de 5 à 700 g/Nm³.

4. Procédé selon l'une quelconque des revendications 1 à 3, dans lequel le véhicule est sélectionné parmi une automobile, un camion, un bus ou un autobus, un bateau, un train, un navire ou un aéronef.

5. Procédé selon l'une quelconque des revendications 1 à 4, dans lequel l'au moins un matériau adsorbeur particulaire de l'étape a) est fourni sous la forme d'une poudre, d'un matériau broyé, d'une poudre granulaire, de granulés ou pellets, de tablettes ou comprimés, d'un matériau compressé ou fritté, de cylindres, d'anneaux, de particules sphériques, d'un matériau de charge ou de remplissage, à l'intérieur d'une colonne et/ou d'une cartouche (1a, 1b).

6. Procédé selon l'une quelconque des revendications 1 à 5, dans lequel l'au moins un matériau adsorbeur particulaire de l'étape a) présente une taille de particule moyenne pondérée ≥ 200 µm, de façon davantage préférable, de 200 à 6 000 µm, de façon encore davantage préférable, de 500 à 5 500 µm et de la façon la plus préférable, de 1 000 à 5 000 µm.

7. Procédé selon l'une quelconque des revendications 1 à 6, dans lequel la réduction de la teneur en vapeur d'eau dans le gaz de combustion est obtenue par physisorption.

8. Procédé selon l'une quelconque des revendications 1 à 7, dans lequel la mise en contact de l'étape c) est mise en oeuvre
a) à une température à l'intérieur de la plage de -50 à 500 °C, de préférence, de -40 à 350 °C, de façon encore davantage préférable, de -30 à 250 °C et de la façon la plus préférable, de -30 à 180 °C ; et/ou
b) à une pression à l'intérieur de la plage de 0,1 à 20 bars, de préférence, de 0,5 à 15 bars et de la façon la plus préférable, de 1 à 10 bars.

9. Procédé selon l'une quelconque des revendications 1 à 8, dans lequel la teneur en vapeur d'eau dans le gaz de combustion qui est obtenue après la mise en contact de l'étape c) est d'au moins 40 % en poids, de préférence, d'au moins 60 % en poids et de façon davantage préférable, d'au moins 80 % en poids, sur la base du poids total de la vapeur d'eau dans le gaz de combustion de l'étape b), en-dessous de la teneur en vapeur d'eau du gaz de combustion de l'étape b).

10. Procédé selon l'une quelconque des revendications 1 à 9, dans lequel le procédé comprend une étape supplémentaire d) de régénération de l'au moins un matériau adsorbeur particulaire après l'étape c) en enlevant la vapeur d'eau qui a été adsorbée sur la surface et/ou à l'intérieur des pores de l'au moins un matériau adsorbeur particulaire.

11. Procédé selon la revendication 10, dans lequel l'étape d) est mise en oeuvre en faisant passer un gaz présentant une température au-delà de la température de l'étape c) dans le courant ou à contre-courant au travers de l'au moins un matériau adsorbeur particulaire, de préférence, le gaz présente une température d'au moins 50 °C, de façon davantage préférable, d'au moins 80 °C, de façon encore davantage préférable, d'au moins 80 °C et de la façon la plus préférable, d'au moins 100 °C.

12. Procédé selon l'une quelconque des revendications 1 à 11, dans lequel l'au moins un matériau adsorbeur particulaire de l'étape a)
a) est fourni dans au moins deux colonnes et/ou cartouches (1a, 1b) qui sont agencées en parallèle ; et/ou
b) est agencé de telle sorte qu'il soit localisé avant une ou plusieurs unité(s) d'adsorbeur (2) qui est ou sont appropriée(s) pour l'adsorption de polluants tels que l'oxyde/les oxydes d'azote, le dioxyde de carbone, le monoxyde de carbone, le/les composé(s) organique(s) volatile(s), l'oxyde/les oxydes de soufre, le sulfure d'hydrogène, l'ammoniac, le/les mercaptane(s), les amines volatiles, le formaldéhyde, l'acétaldéhyde, le propionaldéhyde, l'acétone, le méthanol, le/les éther(s) de dialkyle, une matière particulaire ou des mélanges de ceux-ci.

13. Procédé selon la revendication 12, dans lequel les au moins deux colonnes et/ou cartouches (1a, 1b) comprenant l'au moins un adsorbeur particulaire sont configurées de telle sorte que le procédé de l'étape c) soit mis en oeuvre dans au moins l'une des au moins deux colonnes et/ou cartouches (1a) et que le procédé de l'étape d) soit mis en oeuvre dans la colonne et/ou la cartouche restante ou dans au moins l'une des colonnes et/ou des cartouches restantes (1b).

14. Véhicule comprenant un système pour réduire la teneur en vapeur d'eau dans un gaz de combustion, le système comprenant :
a) au moins deux colonnes et/ou cartouches (1a, 1b) comprenant au moins un matériau adsorbeur particulaire tel que défini selon l'une quelconque des revendications 1, 5 ou 6, dans lequel les au moins deux colonnes et/ou cartouches (1a, 1b) sont agencées en parallèle ; et
b) une ou plusieurs unité(s) d'adsorbeur (2) qui est ou sont appropriée(s) pour l'adsorption de polluants tels que l'oxyde/les oxydes d'azote, le dioxyde de carbone, le monoxyde de carbone, le/les composé(s) organique(s) volatile(s), l'oxyde/les oxydes de soufre, le sulfure d'hydrogène, l'ammoniac, le/les mercaptane(s), les amines volatiles, le formaldéhyde, l'acétaldéhyde, le propionaldéhyde, l'acétone, le méthanol, le/les éther(s) de dialkyle, une matière particulaire ou des mélanges de ceux-ci, laquelle/lesquelles unité(s) est/sont localisée(s) après les au moins deux colonnes ou cartouches (1a, 1b) comprenant au moins un matériau adsorbeur particulaire.

15. Utilisation d'au moins un matériau adsorbeur particulaire tel que défini selon l'une quelconque des revendications 1, 5 ou 6 selon le procédé selon l'une quelconque des revendications 1 à 13.
